# EUROPEAN PATENT APPLICATION

(11) **EP 4 310 209 A1**
(43) Date of publication of application: **24.01.2024**
(21) Application number: 22185628.9
(22) Date of filing: 19.07.2022
(51) Int. Cl.: C22B 7/00, B01J 23/40, C01B 21/26, C22B 11/02, B01D 53/94, B01J 35/00, B01J 35/04

(54) **METHOD FOR RECOVERING VOLATILE PT OR PD AND SYSTEM THEREOF**

(71) Applicant: Yara International ASA, 0277 Oslo (NO)
(72) Inventor: Waller, David, 3931 Porsgrunn (NO)
(74) Representative: De Clercq & Partners

(57) **Abstract**

The present disclosure relates to a method for recovering Pd, Pt, or a combination of Pd and Pt from a gas phase comprising volatile precious metals. The method comprises the step of contacting the gas phase comprising volatile precious metals with a recovery system for recovering Pd, Pt, or a combination of Pd and Pt , wherein the recovery system is coated with metallic Ag. The present disclosure further relates to a system for the catalytic conversion of ammonia into nitric acid. The present disclosure further relates to a method for revamping a system for the catalytic conversion of ammonia into nitric oxide, the system comprising a catalytic system comprising one or more precious metals selected from the group consisting of Pd, Pt and Rh.

## Description

### TECHNICAL FIELD

The present disclosure is in the field of systems for recovering precious metals evaporating in a gas phase.

### INTRODUCTION

Several reactions require a catalyst as they are not or less thermodynamically favoured. Such catalysts are often based upon precious, heavy metals, such as the so-called platinum group metals. The six platinum-group metals are ruthenium (Ru), rhodium (Rh), palladium (Pd), osmium (Os), iridium (Ir), and platinum (Pt). Other metals upon which catalysts can be based upon include copper (Cu), silver (Ag), gold (Au), mercury (Hg), iron (Fe), cobalt (Co), nickel (Ni), zinc (Zn) and rhenium (Rh).

An example of a reaction involving the use of a catalyst comprising precious metals is the oxidation of ammonia into nitric oxide, in the first step of nitric acid production according to the Ostwald process. Ammonia oxidation catalysts commonly comprise platinum and rhodium in the form of an alloy, in order to assist the oxidation of ammonia, that is the fixing of oxygen onto the nitrogen atom of ammonia.

The catalyst and the corresponding support structures in ammonia burners, commonly named burner baskets, are submitted to temperatures as high as 950 °C. Consequently, a challenge is that platinum evaporates and is lost in the gas phase. Typically, as palladium is expensive, recovery gauzes are present in the ammonia oxidation burner that comprise palladium for recovering the platinum lost in the gas phase. Those recovery gauzes are located in the vicinity of the catalyst gauzes and below the catalyst gauzes, that is downstream of the catalyst gauzes with a gas flow from the top to the bottom of the ammonia oxidation burner. Therefore, the recovery gauzes are also exposed to temperatures as high as 950 °C and the expensive palladium from the palladium recovery can also be lost in the gas phase in the ammonia oxidation burner.

### BACKGROUND

GB1343637 relates to a process (Engelhard Minerals & Chemicals Corp, 1971), and a related device, for recovering platinum group metals entrained in a hot gas stream, wherein the gas is passed through a gettering device in the form of an inert ceramic honeycomb structure which is coated with a getter containing gold to absorb the platinum. The document defines gettering as a process wherein the platinum group metals are removed from the gas stream by absorption on a surface and states that gold, silver, palladium, rhodium, and platinum, and combinations thereof are effective getter materials for the platinum group metals. However, in the process/device considered in GB1343637, it is further disclosed that silver or alloys containing silver cannot be used since the silver migrates into the ceramic honeycomb structure and has a harmful effect thereon.

EP63450 (Johnson Matthey, 1982) generally discloses a getter device and a related process for recovery of a precious metal lost from a precious metal-containing catalyst operating at elevated temperature, wherein the getter comprises an agglomeration or assemblage of unwoven fibers made from a metal selected from the group consisting of ruthenium, palladium, iridium, platinum, gold, silver, rhodium and alloys containing one or more or the said metals. This document primarily focuses on Pd/Au alloys and is silent on using silver for recovering volatilized palladium.

GB668935 (Evonik Degussa GmbH, 1949) relates to a process and related device for platinum recovery of volatilized platinum, originating from a catalyst for e.g. the oxidation of ammonia to nitrogen oxides. While it primarily focuses on the use of gold as platinum capture material, it mentions that silver can also be used as platinum trap. In this context, GB668935 claims a process for recovery of platinum, wherein the platinum is trapped on the surface of baffles, disposed at a place where the temperature is at least 700 °C and wherein some of the baffles have a coating of silver or of a silver alloy with gold, palladium or platinum. However, the use of silver presented some disadvantages (e.g. stability), although a silver coating on a metal support (e.g. Ni) was found to be stable.

US20130149207 (Johnson Matthey, 2012) relates to an exhaust system arrangement comprising a platinum and palladium catalyst and a downstream SCR catalyst and a component capable of trapping and/or alloying with a gas phase platinum group metal, wherein this component is typically a metal selected from the group consisting of gold, palladium and silver, preferably a Pd/Au alloy. Accordingly, a solution remains necessary to selectively recover palladium or platinum lost from catalytic gauzes.

### SUMMARY

In one aspect of the disclosure, a method for recovering Pd, Pt, or a combination of Pd and Pt from a gas phase comprising volatile precious metals, is disclosed. The method comprises the step of:
- contacting the gas phase comprising volatile precious metals with a recovery system for recovering Pd Pt, or a combination of Pd and Pt, wherein the recovery system is coated with metallic Ag.

The inventors have found the use of only the Ag metal as the metal present in recovery gauzes enables the selective recovery of platinum and palladium over the remaining platinum group metals. As those metals are expensive, their recovery is highly beneficial. The inventors have found that despite the formation of the oxides of palladium and platinum those oxides in the vapour phase can be recovered by the recovery system: the oxides of the palladium and the platinum being unstable, the corresponding metal can then diffuse and form an alloy with the Ag of the recovery system, such that platinum and palladium are recovered. In contrast to Pt and Pd, the other platinum group metals, such as in catalytic gauzes for converting ammonia into nitric acid, are essentially not recovered: the oxides of the platinum group metals other than Pt and Pd being stable, those metals cannot diffuse in the Ag recovery system such that no alloy is formed and no metal recovery is possible.

In one embodiment according to the method of the disclosure, the gas phase comprises volatile precious metals comprises Pt and Rh.

In one embodiment according to the method of the disclosure, the gas phase comprises volatile precious metals comprises Pd, Pt and Rh.

In one embodiment according to the method of the disclosure, the gas phase comprising volatile precious metals is contacted with the recovery system at a temperature ranging from 750°C to 950°C. In one embodiment according to the method of the disclosure, the gas phase comprising volatile precious metals is contacted with the recovery system at a temperature ranging from 750 to 950 °C, or from 750 to 850 °C, or from 800 to 850 °C , or from 750 to 800 °C.

In one embodiment according to the method of the disclosure, the method further comprises the step of:
- operating a catalytic system in a system for the catalytic conversion of ammonia into nitric oxide, wherein volatile precious metals are evaporated from the catalytic system, thereby producing a gas phase comprising volatile precious metals.

In one embodiment according to the method of the disclosure, the volatile precious metals Pt and Rh or the volatile precious metals Pt, Pd and Rh are evaporated from the catalytic system.

In one embodiment according to the method of the disclosure, the catalytic system is operated at a temperature ranging from 750 to 850 °C, or from 800 to 850 °C , or from 750 to 800 °C.

In one embodiment according to the method of the disclosure, the catalytic system is operated at a temperature ranging from 800 °C to 950 °C, and the recovery system comprises a plurality of woven or knitted metallic Ag gauzes stacked on top of each other, or a plurality of layers of a ceramic or glass support coated with metallic Ag, or a ceramic monolith structure, or a combination thereof.

In one aspect of the disclosure, a system for the catalytic conversion of ammonia into nitric acid is disclosed. The system comprises:
∘ one or more precious metals selected from the group consisting of Pd, Pt and Rh; and
∘ a Pd-containing recovery system for recovering a volatile precious metal evaporating from the catalytic system during the conversion of ammonia into nitric oxide.

The system is characterized in that the catalytic system is operable at a temperature ranging from 750 to 950 °C.

In one embodiment according to the system of the disclosure, the catalytic system is operable at a temperature ranging from 750 to 850 °C, or from 800 to 850 °C, or from 750 to 800 °C .

In one embodiment according to the system of the disclosure, the catalytic system is operable at a temperature ranging from 850 to 930 °C , and the recovery system comprises a plurality of woven or knitted metallic Ag gauzes stacked on top of each other, or a plurality of layers of a ceramic or glass support coated with metallic Ag, or a ceramic monolith structure, or a combination thereof.

In one embodiment according to the system of the disclosure, the recovery system comprises from 3 to 50 woven or knitted metallic Ag gauzes, from 10 to 30 layers of a ceramic or glass support coated with metallic Ag, or a combination of woven or knitted metallic Ag gauzes and layers of a ceramic or glass support coated with metallic Ag, the number of combined gauzes and layers ranging from 3 to 50.

In one embodiment according to the system of the disclosure, the gauzes have a wire diameter ranging from 150 to 400 micron.

In one aspect of the disclosure, a method for revamping a system for the catalytic conversion of ammonia into nitric oxide comprising:
- a catalytic system comprising:
   ∘ one or more precious metals selected from the group consisting of Pd, Pt and Rh; and
   ∘ a Pd-containing recovery system for recovering a volatile precious metal evaporating from the catalytic system during the conversion of ammonia into nitric oxide;
   into a system of the disclosure, is disclosed. The method comprises the step of:
- introducing a recovery system which comprises a woven or knitted metallic Ag gauze, a ceramic or glass support coated with metallic Ag, or a combination of both.

In one embodiment according to the method for revamping of the disclosure, the method further comprises the step of:
- removing the Pd-containing recovery system.

### DETAILED DESCRIPTION

Throughout the description and claims of this specification, the words "comprise" and variations thereof mean "including but not limited to", and they are not intended to (and do not) exclude other moieties, additives, components, integers or steps. Throughout the description and claims of this disclosure, the singular encompasses the plural unless the context otherwise requires. In particular, where the indefinite article is used, the disclosure is to be understood as contemplating plurality as well as singularity, unless the context requires otherwise.

Features, integers, characteristics, compounds, chemical moieties, or groups described in conjunction with a particular aspect, embodiment or example of the disclosure are to be understood to be applicable to any other aspect, embodiment or example described herein unless incompatible therewith. All of the features disclosed in this disclosure (including the description, claims, abstract and drawing), and/or all of the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this disclosure (including the description, claims, abstract and drawing), or to any novel one, or any novel combination, of the steps of any method or process so disclosed.

The enumeration of numeric values by means of ranges of figures comprises all values and fractions in these ranges, as well as the cited end points. The terms "ranging from ... to ..." or "range from ... to ..." or "up to" as used when referring to a range for a measurable value, such as a parameter, an amount, a time period, and the like, is intended to include the limits associated to the range that is disclosed. Where the term "about" when applied to a particular value or to a range, the value or range is interpreted as being as accurate as the method used to measure it.

As defined herein, precious metals are platinum group metals, namely ruthenium, rhodium, palladium, osmium, iridium, and platinum.

As defined herein, a catalytic system comprises a catalytic gauze and a Pd recovery gauze if Pd is present within the catalytic system.

As defined herein, selectivity means that 2 to 2.5 time more of a precious metal is recovered with respect to another precious metal.

In one aspect of the disclosure, a method for recovering Pd, Pt, or a combination of Pd and Pt from a gas phase comprising volatile precious metals, is disclosed. The method comprises the step of contacting the gas phase comprising volatile precious metals with a recovery system for recovering Pd Pt, or a combination of Pd and Pt, wherein the recovery system is coated with metallic Ag.

The inventors have found the use of only the Ag metal as the metal present in recovery gauzes enables the selective recovery of platinum and palladium over the remaining platinum group metals. As those metals are expensive, their recovery is highly beneficial. The inventors have found that despite the formation of the oxides of palladium and platinum those oxides in the vapour phase can be recovered by the recovery system: the oxides of the palladium and the platinum being unstable, the corresponding metal can then diffuse and form an alloy with the Ag of the recovery system, such that platinum and palladium are selectively recovered from the Ag recovery system. The oxides of other precious metals are, on the contrary, stable such that they cannot form an alloy with the Ag of the recovery gauze and, hence, cannot be recovered from the Ag recovery system.

In one embodiment according to the method of the disclosure, the gas phase comprises volatile precious metals comprises Pt and Rh.

Nitric acid produced through the oxidation of ammonia, according to the Ostwald process is a widely employed industrial process. As mentioned above, the catalytic gauzes that are part of ammonia oxidation burners comprise platinum and rhodium. The system of the disclosure is therefore well suited for being implemented in ammonia oxidation burners in order to recover the platinum metal from the catalytic gauzes after their evaporation.

In one embodiment according to the method of the disclosure, the gas phase comprises volatile precious metals comprises Pd, Pt and Rh.

As described above, Pd recovery gauzes are typically integrated in conventional in ammonia oxidation burner for performing the catalytic conversion of ammonia into nitric acid. That is a Pd recovery gauze is combined with a conventional Pt and Rh-containing catalytic gauze and the recovery gauze and the catalytic gauze together form the catalytic system. In the presence of Pd recovery gauzes, when the catalytic conversion of ammonia into nitric acid is performed at temperatures of 800 °C or higher, such as up to 950 °C, the Pt evaporated from the catalytic gauze is recovered by the Pd recovery gauze. The inventors have found that it is possible to combine an Ag-coated recovery system with a catalytic system comprising a catalytic Pt and Rh gauze and a Pd recovery gauze: not only is the Pt recovery increased through the presence of both a Pd and an Ag-coated recovery system, the presence of the Ag-coated recovery system further results in the recovery of the Pd evaporated from the Pd recovery gauzes. Said otherwise, both Pt and Pt are recovered and the recovery of the precious Pt metal from the Pd recovery gauze is not associated with a loss of the precious Pd metal.

In addition, the inventors have observed that the oxides of Pt in the vapour phase are less stable than the oxides of Pd. This means that a temperature below 800 °C, the oxides of Pd will not diffuse in the silver recovery system, such that Pt can be selectively recovered.

In one embodiment according to the method of the disclosure, the gas phase comprising volatile precious metals is contacted with the recovery system at a temperature ranging from 550°C to 950°C. The inventors have established that the method of the disclosure allows for generating a gas phase generated going through the recovery system at a broad temperature range. Hence the method of the disclosure can be applied to a broad range of catalytic processes. In particular, the inventors have established that it is possible to perform the catalytic conversion of ammonia into nitric acid, at temperatures as low as 750 °C, while retaining above 90% conversion of ammonia into nitric oxide, and subsequently achieve a temperature for the gas phase as low as 550 °C. The gas phase coming immediately out of the catalyst system used for the catalytic conversion can indeed and further be adjusted, for example, through the use of a heat exchange system, such that is as low as 550 °C upon contacting the recovery system.

When a gas phase with a reduced temperature is generated, through production of the gas phase at reduced temperature, the energy consumption of the production process is reduced. Further the evaporation of all precious Pd, Pt and Ag metals is reduced, which in turn reduces the loss of those metals in the production process. In addition, further heat from the gas phase can be recovered in the process of reducing the temperature of the gas phase.

In one embodiment according to the method of the disclosure, the gas phase comprising volatile precious metals is contacted with the recovery system at a temperature ranging from 550°C to less than 700°C, or from 600 °C to less than 700 °C, or from 650°C to less than 700°C.

As described above, the generation of a gas phase with a lower temperature through production of the gas phase at reduced temperature minimizes the loss of precious metals and can contribute to additional heat recovery. With regard to Ag, it is of particular benefit to generate a gas phase with a temperature ranging from 500 to less than 700 °C, or from 600 to less than 700 °C, or from 650 to less than 700 °C, in order to reduce the evaporation, and thereby the loss of Ag, such that the recovery of the precious Pd and Pt metals from the recovery system is not accompanied by a loss of the precious Ag metal.

In one embodiment according to the method of the disclosure, the method further comprises the step of operating a catalytic system in a system for the catalytic conversion of ammonia into nitric oxide, wherein volatile precious metals are evaporated from the catalytic system, thereby producing a gas phase comprising volatile precious metals.

Nitric acid produced through the oxidation of ammonia, according to the Ostwald process is a widely employed industrial process. As mentioned above, the catalytic gauzes that are part of ammonia oxidation burners comprise platinum and rhodium. The system of the disclosure is therefore well suited for being implemented in ammonia oxidation burners in order to recover the platinum metal from the catalytic gauzes after their evaporation.

In one embodiment according to the method of the disclosure, the volatile precious metals Pt and Rh or the volatile precious metals Pt, Pd and Rh are evaporated from the catalytic system.

As described above, Pd recovery gauzes are typically integrated in conventional in ammonia oxidation burner for performing the catalytic conversion of ammonia into nitric acid. That is a Pd recovery gauze is combined with a conventional Pt and Rh-containing catalytic gauze and the recovery gauze and the catalytic gauze together form the catalytic system. In the presence of Pd recovery gauzes, when the catalytic conversion of ammonia into nitric acid is performed at temperatures of 800 °C or higher, such as up to 950 °C, the Pt evaporated from the catalytic gauze is recovered by the Pd recovery gauze. The inventors have found that it is possible to combine an Ag-coated recovery system with a catalytic system comprising a catalytic Pt and Rh gauze and a Pd recovery gauze: not only is the Pt recovery increased through the presence of both a Pd and an Ag-coated recovery system, the presence of the Ag-coated recovery system further results in the recovery of the Pd evaporated from the Pd recovery gauzes. Said otherwise, both Pt and Pt are recovered and the recovery of the precious Pt metal from the Pd recovery gauze is not associated with a loss of the precious Pd metal.

In addition, the inventors have observed that the oxides of Pt in the vapour phase are less stable than the oxides of Pd. This means that a temperature below 800 °C, the oxides of Pd will not diffuse in the silver recovery system, such that Pt can be selectively recovered.

In one embodiment according to the method of the disclosure, the catalytic system is operated at a temperature ranging from 750 to 950 °C, or at a temperature ranging from 750 to 850 °C, or from 800 to 850 °C , or from 750 to 800 °C.

The inventors have established that the method of the disclosure can be performed through operating the catalytic system within a broad temperature range. Hence, the method of the disclosure can be applied to a broad range of catalytic processes. In particular, the inventors have established that it is possible to perform the catalytic conversion of ammonia into nitric acid, at temperatures as low as 750 °C, while retaining above 90% conversion of ammonia into nitric oxide.

When the catalytic is performed at temperatures as low as 750 °C , the energy consumption of the production process is reduced. Further the evaporation of all precious Pd, Pt and Ag metals is reduced, which in turn reduces the loss of those metals in the production process. In addition, a gas phase at a lower temperature is generated, which minimizes the silver losses from the recovery system.

In one embodiment according to the method of the disclosure, the catalytic system is operated at a temperature ranging from 850 °C to 930 °C, and the recovery system comprises a plurality of woven or knitted metallic Ag gauzes stacked on top of each other, or a plurality of layers of a ceramic or glass support coated with metallic Ag, or a ceramic monolith structure, or a combination thereof.

The inventors have found that when the recovery system comprises a plurality of woven or knitted metallic Ag gauzes stacked on top of each other, or a plurality of layers of a ceramic or glass support coated with metallic Ag, or a ceramic monolith structure, or a combination thereof, the loss of Ag in the evaporation phase is reduced. This is due to the fact that when there are several Ag-coated recovery elements on top of each other, some elements are upstream with respect to others, that is they are being contacted with the gas stream generated from the catalytic conversion earlier than some other elements. As a result the vapor phase becomes richer in Ag and, consequently, the evaporative loss in Ag from the Ag-coated recovery elements downstream is reduced.

Hence, for the catalytic processes to be performed at temperatures ranging from 800 to 950 °C , it is beneficial to practice the method of the disclosure using a recovery system comprising a plurality of woven or knitted metallic Ag gauzes stacked on top of each other, or a plurality of layers of a (ceramic or glass support coated with metallic Ag, or ceramic monolith structure, or a combination thereof. Ceramic tiles are particularly suitable as layers, while Rashig rings and pellets are particularly suitable as a support to be coated with silver.

In one aspect of the disclosure, a system for the catalytic conversion of ammonia into nitric acid is disclosed. The system comprises a catalytic system comprising one or more precious metals selected from the group consisting of Pd, Pt and Rh; and a recovery system for the recovery of Pd, Pt, or a combination of Pd and Pt, coated with metallic Ag, downstream of the catalytic system.

The system is characterized in that the catalytic system is operable at a temperature ranging from 750 to 950 °C .

The inventors have found the use of only the Ag metal as the metal present in recovery gauzes enables the selective recovery of platinum and palladium over the remaining platinum group metals. As those metals are expensive, their recovery is highly beneficial. The inventors have found that despite the formation of the oxides of palladium and platinum those oxides in the vapour phase can be recovered by the recovery system: the oxides of the palladium and the platinum being unstable, the corresponding metal can then diffuse and form an alloy with the Ag of the recovery system, such that platinum and palladium are selectively recovered from the Ag recovery system. The oxides of other precious metals are, on the contrary, stable such that they cannot form an alloy with the Ag of the recovery gauze and, hence, cannot be recovered from the Ag recovery system.

Further, the inventors have found that the system is operable at temperatures as low as 750 °C, such that the desired catalytic conversion, for example of ammonia into nitric oxide, is achieved to above 90%. The system remains operable at temperatures as high as 950 °C , such that a broad range of catalytic reactions can be performed with the system of the disclosure.

Further, when the catalytic conversion is performed at temperatures as low as 750 °C , the energy consumption for operating the system is reduced. Further the evaporation of all precious Pd, Pt and Ag metals is reduced, which in turn reduces the loss of those metals in the production process.

In one embodiment according to the system of the disclosure, the catalytic system is operable at a temperature ranging from 750 to 850 °C, or from 800 to 850 °C, or from 750 to 800 °C.

As described above, catalytic conversion at lower temperatures minimizes the loss of precious metals. With regard to Ag, it is of particular benefit to operate at temperatures ranging from 750 to 850 °C, or from 800 to 850 °C , or from 750 to 800 °C , in order to reduce the evaporation, and thereby the loss of Ag, such that the recovery of the precious Pd and Pt metals from the recovery system is not accompanied by a loss of the precious Ag metal.

In one embodiment according to the system of the disclosure, the catalytic system is operable at a temperature ranging from 850 to 930 °C , and the recovery system comprises a plurality of woven or knitted metallic Ag gauzes stacked on top of each other, or a plurality of layers of a ceramic or glass support coated with metallic Ag, or a combination of both.

Ceramic tiles are particularly suitable as layers, while Rashig rings and pellets are particularly suitable as a support to be coated with silver.

The inventors have found that when the recovery system comprises a plurality of woven or knitted metallic Ag gauzes stacked on top of each other, or a plurality of layers of a ceramic or glass support coated with metallic Ag, or a combination of both, the loss of Ag in the evaporation phase is reduced. This is due to the fact that when there are several Ag-coated recovery elements on top of each other, some elements are upstream with respect to others, that is they are being contacted with the gas stream generated from the catalytic conversion earlier than some other elements. As a result the vapor phase becomes richer in Ag and, consequently, the evaporative loss in Ag from the Ag-coated recovery elements downstream is reduced.

Hence, it is beneficial to use a recovery system comprising a plurality of woven or knitted metallic Ag gauzes stacked on top of each other, or a plurality of layers of a ceramic or glass support coated with metallic Ag, or a combination of both, in catalytic processes to be performed at temperatures above 800 °C . Further, considering the importance of nitric acid production using Pt-Rh catalyst gauzes and Pd recovery system, it is beneficial to operate the catalytic system between 850 and 930 °C , in order to oxidize ammonia to nitric oxide.

In one embodiment according to the system of the disclosure, the recovery system comprises from 3 to 50 woven or knitted metallic Ag gauzes, from 10 to 30 layers of a ceramic or glass support coated with metallic Ag, or a combination of woven or knitted metallic Ag gauzes and layers of a ceramic or glass support coated with metallic Ag, the number of combined gauzes and layers ranging from 3 to 50.

It has been found that when the number of Ag-coated recovery elements stacked on top of each other ranges from 3 to 50, the Ag loss, when the recovery system is exposed to a gas phase at a temperature ranging from 800 to 950 °C, is reduced.

In one embodiment according to the system of the disclosure, the gauzes have a wire diameter ranging from 150 to 400 micron.

Using such gauzes offers increased surface area such that the gas is optimally contacted with the gauze, leading to optimal trapping of the precious platinum, palladium, or mixture of platinum and palladium in the gas phase and subsequent formation of Ag-Pt and/or Ag-Pd alloy, for the recovery of the Pt and/or Pd precious metal in the gas phase.

The person skilled in the art will, without difficulty optimize the diameter such that the quantity of silver present on the gauze is sufficient to achieve the target silver recovery. The system of the disclosure is flexible in that the diameter of the different gauzes present in the system can have different diameters, the diameter decreasing in the downstream direction. This means that the gauzes most upstream have a larger diameter to offer some sacrificial silver, that is silver that is going to evaporate and contribute the saturation in silver of the gas phase, thereby reducing the evaporative of silver from the gauzes further downstream.

In one aspect of the disclosure, a method for revamping a system for the catalytic conversion of ammonia into nitric oxide comprising a catalytic system comprising one or more precious metals selected from the group consisting of Pd, Pt and Rh and a Pd-containing recovery system for recovering a volatile precious metal evaporating from the catalytic system during the conversion of ammonia into nitric oxide, into a system of the disclosure, is disclosed. The method comprises the step of introducing a recovery system which comprises a woven or knitted metallic Ag gauze, a ceramic or glass support coated with metallic Ag, or a combination of both.

As described above, Pd recovery gauzes are typically integrated in conventional in ammonia oxidation burner for performing the catalytic conversion of ammonia into nitric acid. That is a Pd recovery gauze is combined with a conventional Pt and Rh-containing catalytic gauze and the recovery gauze and the catalytic gauze together form the catalytic system. In the presence of Pd recovery gauzes, when the catalytic conversion of ammonia into nitric acid is performed at temperatures of 800 °C or higher, such as up to 950 °C, the Pt evaporated from the catalytic gauze is recovered by the Pd recovery gauze. The inventors have found that it is possible to combine an Ag-coated recovery system with a catalytic system comprising a catalytic Pt and Rh gauze and a Pd recovery gauze: not only is the Pt recovery increased through the presence of both a Pd and an Ag-coated recovery system, the presence of the Ag-coated recovery system further results in the recovery of the Pd evaporated from the Pd recovery gauzes. Said otherwise, both Pt and Pt are recovered and the recovery of the precious Pt metal from the Pd recovery gauze is not associated with a loss of the precious Pd metal.

In one embodiment according to the method for revamping of the disclosure, the method further comprises the step of removing the Pd-containing recovery system.

Alternatively, since Ag is suitable for recovering the volatile precious Pt metal, it is possible to perform the conversion of ammonia into nitric acid solely with a Pt and Rh-based catalytic gauze as part of the catalytic system, that is in the absence of a Pd recovery gauze, thus simplifying the system.

### EXAMPLE

Three sets Ag nets, each set comprising in turn 3 Ag nets, were installed in a 9 cm pipe at three different locations downstream of a catalytic gauze for converting ammonia into nitric oxide and operated at about 900 °C , exposing them to three temperatures: 668, 598 and 566 °C . The catalytic gauze comprised Pt and Rh. Pd recovery gauzes were also comprised as part of the catalytic system. The Ag nets were sourced from Goodfellows Metals and were also 190 µm plain weave, with a 400 µm wire diameter and 62 cells/cm².

Each silver net was sandwiched between a pair of Megapyr gauzes. This was to ensure that there was no risk of fusion of the silver nets to each other so that a good mass balance for each silver net could be obtained. The stacks of three nets were rotated by 15 ° relative to each other.

The Ag nests exposed to a temperature of 668 °C were exposed for 30.8 days. The Ag nests exposed to 598 °C were run for 35.3 days. The Ag nests exposed to a temperature of 668 °C were exposed for 27.1 days.

The recovered nets were weighed and analyzed by SEM/EDS analysis and chemically by ICP. The mass change and chemical analysis of the two tests are summarized in Tables 1, 2 and 3, for the nests subjected to 668, 598 and 566 °C respectively.

**Table 1**

| Sample | Installed mass g | Deinstalled mass g | Mass change g | Metal content in deinstalled nets atom% | | | Metal content in deinstalled nets g | | | Silver loss | |
|---|---|---|---|---|---|---|---|---|---|---|---|
| | | | | Pt | Pd | Ag* | Pt | Pd | Ag* | g | % of installed |
| Upstream | 9,88 | 8,39 | 1,485 | 0,438 | 0,356 | 99,20 | 0,066 | 0,029 | 8,299 | 1,591 | 16,0 |
| Middle | 9,12 | 8,04 | 1,082 | 0,461 | 0,376 | 99,16 | 0,067 | 0,030 | 7,941 | 1,179 | 12,9 |
| Downstream | 9,57 | 8,88 | 0,692 | 0,427 | 0,336 | 99,23 | 0,068 | 0,029 | 9,780 | 0,789 | 8,2 |

**Table 2**

| Sample | Installed mass g | Deinstalled mass g | Mass change 9 | Metal content in deinstalled nets atom% | | | Metal content in deinstalled nets g | | | Silver loss | |
|---|---|---|---|---|---|---|---|---|---|---|---|
| | | | | Pt | Pd | Ag* | Pt | Pd | Ag* | g | % of installed |
| Upstream | 9,62 | 7,26 | 2,36 | 0,477 | 0,387 | 99,13 | 0,062 | 0,0276 | 7,166 | 2,454 | 25,5 |
| Middle | 9,81 | 7,63 | 2,18 | 0,377 | 0,315 | 99,51 | 0,052 | 0,0237 | 7,557 | 2,253 | 23,0 |
| Downstream | 10,27 | 8,32 | 1,95 | 0,305 | 0,244 | 99,45 | 0,046 | 0,0200 | 8,258 | 2,012 | 19,5 |

**Table 3**

| Sample\| | Installed Mass g | Exposed Mass g | Mass change g | PGM Content Wt.% | | | PGM Content by Mass g | | | Silver loss | |
|---|---|---|---|---|---|---|---|---|---|---|---|
| | | | | Pd | Pt | Ag | Pd | Pt: | Ag | Ag loss | Ag Loss |
| | | | | | | | | | | g | % |
| Upstream | 10,89 | 9,63 | 1,26 | 0,25 | 0,35 | 99,40 | 0,024 | 0,034 | 9,572 | 1,318 | 12,1 |
| Middle | 10,70 | 9,65 | 1,05 | 0,36 | 0,45 | 99,19 | 0,035 | 0,043 | 9,572 | 1,128 | 10,5 |
| Downstream | 10,57 | 9,83 | 0,74 | 0,44 | 0,50 | 99,06 | 0,043 | 0,049 | 9,738 | 0,832 | 7,9 |

Ag losses were higher for higher temperatures. The loss of Ag decreased for each subsequent Ag gauze. This might be explained from the fact that upstream gauzes partly saturate the gas stream with Ag vapours, reducing the Ag loss from downstream gauzes. In general a greater weight and atom % of Pt was recovered compared to Pd. By atom%, circa 25% more Pt than Pd. No Rh was captured in either test.

In the sample exposed at 668 °C , some clear gradients in capture are observed, with a higher concentration of Pt and Pd present in the upstream nets. This can be explained by a higher Ag loss from the upper gauzes. At 598 °C , compositional gradients were largely absent.

Visually, the upstream side of the gauzes were darker, and the downstream sides still bright. SEM analysis showed restructuring of the alloy, but not significant wire swelling that typically seen with Pd catchment gauzes.

The surface reconstruction was somewhat less severe than we observe with Pd recovery gauzes. The EDS analysis showed a range of few atom % of Pt and Pd contents, indicating a surface enrichment of captured platinum group metals, compared to the bulk composition determined by ICP. The lack of swelling of the silver wire may be beneficial in that it is not expected to observe a development of pressure drop over a silver-based catchment system.

## Claims

1. A method for recovering Pd, Pt, or a combination of Pd and Pt from a gas phase comprising volatile precious metals, comprising the step of:
• contacting the gas phase comprising volatile precious metals with a recovery system for recovering Pd, Pt, or a combination of Pd and Pt , wherein the recovery system is coated with metallic Ag.

2. The method according to claim 1, wherein the gas phase comprising volatile precious metals comprises Pt and Rh.

3. The method according to any one of claims 1 to 2, wherein the gas phase comprising volatile precious metals comprises Pd, Pt and Rh.

4. The method according to any one of claims 1 to 3, wherein the gas phase comprising volatile precious metals is contacted with the recovery system at a temperature ranging from 550°C to 950°C.

5. The method according to claim 4, wherein the gas phase comprising volatile precious metals is contacted with the recovery system at a temperature ranging from 550°C to less than 700°C, or from 600 °C to less than 700 °C, or from 650°C to less than 700°C.

6. The method according to any one of claims 1 to 5, further comprising the step of:
• operating a catalytic system in a system for the catalytic conversion of ammonia into nitric oxide, wherein volatile precious metals are evaporated from the catalytic system, thereby producing a gas phase comprising volatile precious metals.

7. The method according to claim 6, wherein the volatile precious metals Pt and Rh or the volatile precious metals Pt, Pd and Rh are evaporated from the catalytic system.

8. The method according to claim 6 or 7, wherein the catalytic system is operated at a temperature ranging from 750 to 950 °C, or from 750 to 850 °C, or from 800 to 850 °C , or from 750 to 800 °C.

9. The method according to claim 6 or 7, wherein the catalytic system is operated at a temperature ranging from 800 °C to 950 °C, and wherein the recovery system comprises a plurality of woven or knitted metallic Ag gauzes stacked on top of each other, or a plurality of layers of a (ceramic or glass support coated with metallic Ag, or a combination of both.

10. A system for the catalytic conversion of ammonia into nitric acid comprising:
• a catalytic system comprising one or more precious metals selected from the group consisting of Pd, Pt and Rh; and
• a recovery system for the recovery of Pd, Pt, or a combination of Pd and Pt, coated with metallic Ag, downstream of the catalytic system;
wherein the catalytic system is operable at a temperature ranging from 750 to 950 °C .

11. The system according to claim 10, wherein the catalytic system is operable at a temperature ranging from 750 to 850 °C , or from 800 to 850 °C , or from 750 to 800 °C .

12. The system according to claim 10, wherein the catalytic system is operable at a temperature ranging from 850 to 930 °C, and wherein the recovery system comprises a plurality of woven or knitted metallic Ag gauzes stacked on top of each other, or a plurality of layers of a ceramic or glass support coated with metallic Ag, or a ceramic monolith structure, or a combination thereof.

13. The system according to claim 12, wherein the recovery system comprises from 3 to 50 woven or knitted metallic Ag gauzes, from 10 to 30 layers of a ceramic or glass support coated with metallic Ag, or a combination of woven or knitted metallic Ag gauzes and layers of a ceramic or glass support coated with metallic Ag, the number of combined gauzes and layers ranging from 3 to 50.

14. The system according to any one of claims 10 to 13, wherein the gauzes have a wire diameter ranging from 150 to 400 micron.

15. A method for revamping a system for the catalytic conversion of ammonia into nitric oxide, the system comprising:
• a catalytic system comprising:
∘ one or more precious metals selected from the group consisting of Pd, Pt and Rh; and
∘ a Pd-containing recovery system for recovering a volatile precious metal evaporating from the catalytic system during the conversion of ammonia into nitric oxide;
into a system according to any one claims 10 to 14, comprising the step of:
• introducing a recovery system which comprises a woven or knitted metallic Ag gauze, a ceramic or glass support coated with metallic Ag, or a combination of both.

16. The method according to claim 15 further comprising the step of:
• removing the Pd-containing recovery system.
